# EUROPÄISCHE PATENTSCHRIFT

(11) **EP 1 862 099 B1**
(45) Veröffentlichungstag und Bekanntmachung des Hinweises auf die Patenterteilung: **23.06.2010**
(21) Anmeldenummer: 07009587.2
(22) Anmeldetag: 14.05.2007
(51) Int. Cl.: A47J 27/16, A47J 27/04, A21B 3/04, F24C 15/32, H05B 3/78

(54) **Küchengerät mit Dampferzeuger und absenkbarer Heizvorrichtung**
Kitchen appliance with steam unit and retractable heating device
Appareil de cuisine doté d'un générateur de vapeur et dispositif de chauffage abaissable

(30) Priorität: 01.06.2006 CH 8852006
(43) Veröffentlichungstag der Anmeldung: 05.12.2007
(73) Patentinhaber: V-Zug AG, CH-6301 Zug (CH)
(72) Erfinder: Rohr, Hansjörg, 8910 Affoltern a. A. (CH); Matzinger, Reinhard, 6330 Cham (CH)
(74) Vertreter: Sutter, Kurt

(56) Entgegenhaltungen:
- EP-A- 1 108 384
- US-A- 1 470 834

## Beschreibung

Die Erfindung betrifft ein Küchengerät mit einem Dampferzeuger gemäss Oberbegriff von Anspruch 1.

Dampferzeuger werden z.B. in Dampfgargeräten verwendet, um den für die Dampfgarung notwendigen Dampf zu erzeugen.

EP 1 108 384 beschreibt z.B. einen Dampferzeuger, der in einer Wasserschublade integriert ist, was jedoch dazu führt, dass die Wasserschublade einen komplizierten Aufbau besitzt und mit elektrischen Anschlüssen versehen sein muss. CH 691 281 beschreibt andererseits ein Dampfgargerät, dessen Dampferzeuger ausserhalb der Wasserschublade angeordnet ist, wobei eine Fördervorrichtung für das Wasser von der Schublade zum Dampferzeuger benötigt wird. Dadurch kann einerseits der Aufbau der Wasserschublade vereinfacht werden, andererseits ist der Gesamtaufbau des Geräts aber kompliziert und eine Entkalkung des Dampferzeugers aufwändig.

Es stellt sich die Aufgabe, ein Gerät der eingangs genannten Art bereitzustellen, dessen Wasserschublade einfach aufgebaut ist und das dennoch einen unkomplizierten Gesamtaufbau besitzt.

Anspruchsgemäss wird diese Aufgabe dadurch gelöst, dass die Heizvorrichtung beweglich angeordnet und in die Schublade absenkbar ist. Dadurch kann die Schublade einfach aufgebaut sein. Andererseits kann eine spezielle Fördervorrichtung entfallen.

Vorzugsweise besitzt die Heizvorrichtung ein Heizungsgehäuse und eine im Heizungsgehäuse angeordnete Heizung. Im Heizungsgehäuse ist mindestens eine Öffnung vorgesehen, durch welche das Wasser aus der Schublade zur Heizung gelangen kann. Diese Massnahme erlaubt es, das aufzuheizende Wasservolumen klein zu halten, was eine schnelle Bereitstellung von Dampf ermöglicht.

In einer weiteren vorteilhaften Ausführung ist die Heizvorrichtung derart mit Auftriebsmitteln ausgestaltet, dass sie im Bereich der Oberfläche des Wassers getragen wird, d.h. nicht an den Boden der Wasserschublade absinkt. Dadurch wird nur ein kleines Wasservolumen verdrängt, was es erlaubt, die Wasserschublade höher zu füllen als bei einer Lösung, bei welcher die Heizvorrichtung tief in das Wasser eintaucht.

Weitere bevorzugte Ausführungen und Anwendungen der Erfindung ergeben sich aus den abhängigen Ansprüchen sowie aus der nun folgenden Beschreibung anhand der Figuren. Dabei zeigen:
Fig. 1 eine erste Ausführung der Erfindung bei ausgezogener Wasserschublade,
Fig. 2 die Ausführung nach Fig. 1 bei eingeschobener Wasserschublade,
Fig. 3 eine zweite Ausführung der Erfindung bei ausgezogener Wasserschublade,
Fig. 4 die Ausführung nach Fig. 3 bei eingeschobener Wasserschublade und hohem Wasserstand und
Fig. 5 die Ausführung nach Fig. 3 bei eingeschobener Wasserschublade und tiefem Wasserstand.

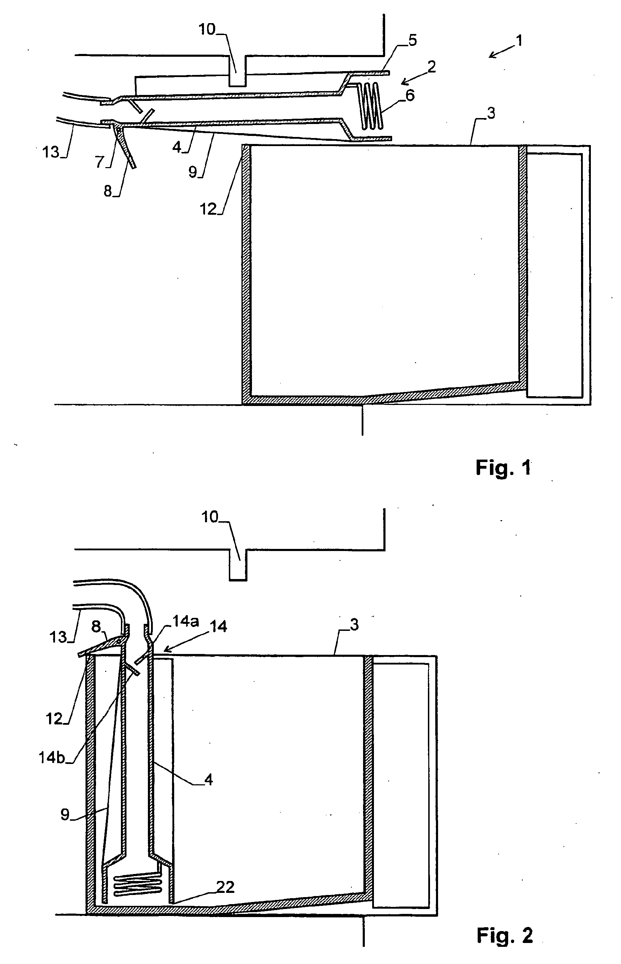

Die Ausführung der Erfindung nach Fig. 1 und 2 zeigt z.B. den Dampferzeuger 1 für ein Dampfgargerät. Dieses besitzt einen Garraum (nicht dargestellt) zur Aufnahme des zu garenden Guts. Ein Schlauch 13 bildet eine Leitung, um den Dampf vom Dampferzeuger 1 zum Garraum zu führen.

Der Dampferzeuger 1 besitzt eine Heizvorrichtung 2, welche von oben in eine Wasserschublade 3 absenkbar ist. In der Ausführung nach Fig. 1 und 2 besitzt die Heizvorrichtung 2 ein Heizgehäuse 5, welches an einem rohrförmigen Träger 4 angeordnet ist, der sich an einem Ende in einem endseitig offenen Kopfbereich aufweitet und das Heizgehäuse 5 bildet. Im Heizungsgehäuse 5 des ist eine Heizung 6 angeordnet.

Das Heizungsgehäuse 3 und der Träger 4 bilden im vorliegenden Beispiel ein im Wesentlichen starres Bauteil und bestehen z.B. aus temperaturbeständigem Kunststoff oder aus Metall. An dem dem Heizungsgehäuse 5 gegenüberliegenden Ende ist der Träger 4 um eine horizontale Achse 7 schwenkbar am stationären Gehäuse des Küchengeräts befestigt. Am gleichen Ende ist eine Führungsnase 8 angeordnet, und an der in Fig. 1 unteren Seite des Heizungsgehäuse s 3 ist eine Führungsflanke 9 vorgesehen, welche die Bewegung der Heizvorrichtung beim Einschieben und Herausziehen der Wasserschublade 3 steuern.

Fig. 1 zeigt die Vorrichtung bei herausgezogener Wasserschublade 3. Die Heizvorrichtung 2 befindet sich in einer oberen Stellung, in welcher sie z.B. mittels Klemmung von einer Haltevorrichtung 10, die stationär am Gehäuse des Küchengeräts angeordnet ist, festgehalten wird.

Wird die Schublade 3 aus der in Fig. 1 gezeigten Stellung in die in Fig. 2 gezeigten Stellung eingeschoben, so stösst die Oberkante 12 der geräteseitigen Wand der Wasserschublade 3 gegen die Führungsnase 8, wodurch sich der Träger 4 mit der Heizvorrichtung 2 um die Achse 7 zu schwenken beginnt und aus der Haltevorrichtung 10 gelöst wird, so dass die Heizvorrichtung 2 sich in die in Fig. 2 gezeigte Stellung absenken kann. In dieser Stellung ist die Heizung 6 in das Wasser eingetaucht. Wird sie in Betrieb gesetzt, so kann sie Dampf erzeugen, der durch den Schlauch 13 abgeführt wird.

Wie aus Fig. 2 ersichtlich, ist im Schaft 4 eine Schikane 14 vorgesehen, die von zwei in den Schaft ragenden, sich überlappenden Vorsprüngen 14a, 14b gebildet wird. Diese dienen als Spritzschutz und verhindern, dass von den aufsteigenden Dampfblasen Wassertropfen in den Schlauch 13 geworfen werden können.

Wird die Wasserschublade 3 wieder aus dem Gerät gezogen, so läuft deren Oberkante 12 gegen die Führungsflänke 9 und hebt so den Träger 4 und somit die Heizvorrichtung 2 wieder an, bis der Träger 4 von der Haltevorrichtung 10 erfasst werden kann.

Die Heizung 6 wird über ein flexibles Kabel (nicht gezeigt) mit Strom versorgt. In der Heizvorrichtung können weiter Temperatursensoren eingebaut sein, über welche der Betrieb der Heizung gesteuert werden kann.

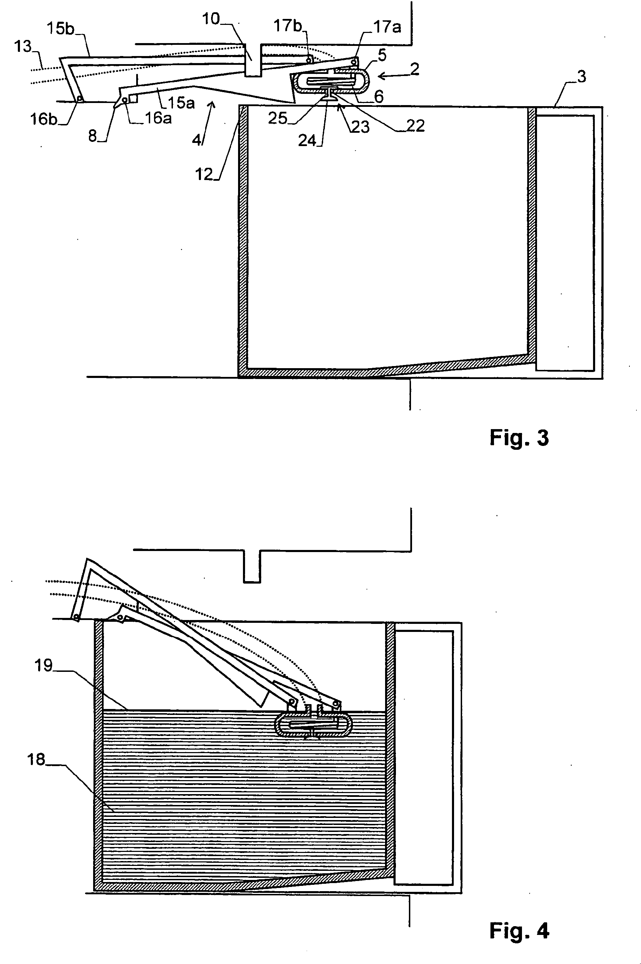

Die in Fig. 3 bis 5 gezeigte Ausführung der Erfindung unterscheidet sich von der ersten Ausführung im Aufbau der Heizvorrichtung 2 und des Trägers 4. Hier bildet der Träger 4 eine Parallelogrammführung, welche die Heizvorrichtung 2 kippfest aber schwenkbar trägt. Hierzu besteht der Träger 4 aus zwei Schwenkarmen 15a, 15b, welche an einem ihrer Enden an horizontalen Achsen 16a, 16b schwenkbar am stationären Gehäuse des Geräts angelenkt sind. An den gegenüberliegenden Enden sind die Schwenkarme 15a, 15b an horizontalen Achsen 17a, 17b schwenkbar an der Heizvorrichtung 2 angelenkt. Dabei bilden die Achsen 16a, 16b und 17a, 17b in bekannter Weise die Eckpunkte eines Parallelogramms, so dass eine immer horizontale Ausrichtung der Heizvorrichtung 2 gewährleistet ist.

Die Heizvorrichtung 2 besitzt wiederum ein Heizungsgehäuse 5 mit darin angeordneter Heizung 6. Das Heizungsgehäuse 5 ist so ausgestaltet, dass es ausreichend Auftrieb besitzt, damit es nur soweit in das Wasser der Schublade einsinkt, dass die Heizung 5 unter die Oberfläche des Wassers zu liegen kommt und gut von Wasser bedeckt ist. Hierzu können z.B. an der Oberseite des Heizungsgehäuse s 5 geeignete Schwimmer angeordnet sein (nicht gezeigt).

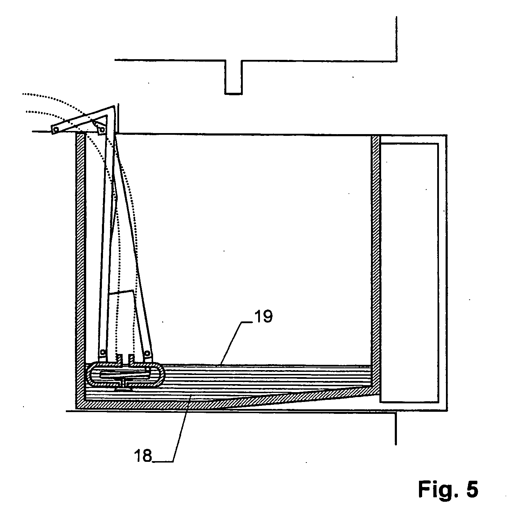

In der in Fig. 3 gezeigten angehobenen Stellung bei ausgezogener Wasserschublade 3 wird mindestens einer der Schwenkarme 15a, 15b oder die Heizvorrichtung 2 wiederum von einer Haltevorrichtung 10 gehalten. Wird die Schublade 3 eingeschoben, so stösst sie mit der Oberkante 12 gegen eine Führungsnase 8 am hinteren Ende des Schwenkarms 15a und löst so den Träger 4 aus der Halte-vorrichtung 10. Die Heizvorrichtung 2 senkt sich in das Wasser 18 der Wasserschublade 3 ab und schwimmt in der oben erwähnten Weise im Bereich der Wasseroberfläche 19, so dass die Heizung 6 mit Wasser bedeckt ist. Wie ein Vergleich der Figuren 4 und 5 zeigt, passt sich die Position der Heizvorrichtung dem jeweiligen Wasserstand an.

Wird die Heizung 6 erhitzt, so kann sie nun wiederum Dampf erzeugen, der durch den flexiblen Schlauch 13 (gestrichelt dargestellt in Fig. 4 und 5) abgeführt wird. In der Ausführung nach Fig. 3 bis 5 ist der Schlauch 13 direkt an der Heizvorrichtung 2 befestigt.

Das Heizungsgehäuse 5 muss mit mindestens einer geeigneten Öffnung versehen sein, welche es dem Wasser erlaubt, zur Heizung 6 zu gelangen. In der Ausführung nach Fig. 1 und 2 wird diese Öffnung durch das nach unten offene Ende des Heizungsgehäuse s 5 gebildet. In der abgesenkten Betriebsstellung (Fig. 2) befindet sich dieses Ende nahe am Boden der Wasserschublade 3, so dass der für den Durchtritt des Wassers verbleibende Querschnitt relativ klein ist. Dies ist vorteilhaft, da ein grosser Wasseraustausch zwischen Heizungsgehäuse 5 und dem Rest der Wasserschublade 3 zu unerwünschten Energieverlusten führen würde.

In der Ausführung nach Fig. 3 bis 5 ist der Wasseraustausch über eine Öffnung 22 an der Unterseite des Heizungsgehäuse s 5 gewährleistet. In dieser Öffnung ist ein Auftriebsventil 23 angeordnet. Dieses besteht aus einem Schwimmer 24, der über einen Halter 25 in der Öffnung 22 eingehängt ist. Befindet sich die Heizvorrichtung 2 in der in Fig. 3 dargestellten angehobenen Stellung, so hängt der Schwimmer 24 in einem Abstand von der Öffnung 22 und gibt diese vollständig frei. Dies erlaubt eine schnelle Entleerung des Heizungsgehäuse s 5, und durch die vollständig geöffnete Öffnung 22 können auch Kalkpartikel ohne weiters ausgeschwemmt werden.

Tritt die Heizvorrichtung 2 in das Wasser ein, so steigt der Schwimmer 24 hoch und verschliesst die Öffnung 22 stärker. Dabei sind die Öffnung 22 und der Schwimmer 24 so ausgestaltet, dass die Öffnung 22 nicht vollständig verschlossen wird - vielmehr bleibt ein Teil der Öffnung 22 offen, dem Wasser wird aber gegenüber der Stellung von Fig. 3 ein stark reduzierter Durchtrittsquerschnitt zur Verfügung gestellt. Dadurch wird der Wasseraustausch zwischen dem Heizungsgehäuse 5 und der Schublade 3 erschwert, wodurch sich die Energieeffizienz verbessert. Alternativ kann Öffnung 22 vom Schwimmer 24 auch vollständig verschlossen werden, falls zusätzlich z.B. eine zweite Öffnung mit kleinerem Querschnitt vorgesehen ist.

In den soweit gezeigten Ausführungen kann die Heizvorrichtung 2 mittels einer Schwenkbewegung in die Wasserschublade abgesenkt werden. Denkbar ist auch eine Ausgestaltung des Trägers 4 derart, dass die Heizvorrichtung 2 ungefähr vertikal von oben in die Wasserschublade abgesenkt wird. Hierzu kann der Träger z.B. aus Bändern oder Schnüren bestehen, welche zum Absenken der Heizvorrichtung 2 abgerollt werden. Auch in dieser Ausführung ist die Heizvorrichtung 2 vorzugsweise derart ausgestaltet, dass sie genau soviel Auftrieb erzeugt, wie notwendig ist, um die Heizung 6 permanent mit Wasser zu überdecken, ohne dass die Heizvorrichtung an den Boden absinkt.

In den soweit beschriebenen Ausführungen wird die die Bewegung des Trägers 4 durch die Bewegung der Schublade 3 ausgelöst. Denkbar ist jedoch auch ein separater Betätigungsmechanismus, der vom Benutzer betätigt wird, oder ein elektrischer Betätigungsmechanismus, der von der Steuerung des Küchengeräts betätigt wird.

Wenn die Heizvorrichtung 2 schwimmend ausgestaltet ist, kann ihre Position von einem Wasserstandssensor überwacht werden, z.B. in Form eines von der Trägervorrichtung 4 betätigbaren Schalters, der aus der Position der Heizvorrichtung 2 ein Pegelstandssignal ableitet. Auf diese Weise kann ein einfacher Pegelsensor implementiert werden, der z.B. dem Benutzer anzeigen kann, wann die Schublade nachgefüllt werden muss.

Die beschriebene Ausgestaltung hat den Vorteil, dass sie mit wenigen Teilen auskommt und keine Fördervorrichtung für das Wasser benötigt. Sie ist unempfindlich gegen Kalk, kann einfach gereinigt werden (indem die Wasserschublade mit Entkalker gefüllt wird) und Kalkabplatzer werden durch das Ausleeren des Restwassers in einfacher Weise entsorgt. Die Heizvorrichtung ist gut zugänglich und kann einfach gewartet oder ersetzt werden. Die Wasserschublade ist einfach aufgebaut und kann leicht gereinigt werden. Zwischen der Schublade und dem Gerät ist keine mechanische oder elektrische Kupplung erforderlich. Der Wasserbehälter kann nach dem Dämpfen sofort entleert werden, da sich selbständig und schnell eine Mischtemperatur einstellt.

Der Dampferzeuger kann für alle Küchengeräte eingesetzt werden, die Dampf benötigen.

## Patentansprüche

1. Küchengerät mit einem Dampferzeuger umfassend eine Schublade (3) zur Aufnahme von Wasser und eine Heizvorrichtung (2) zum Verdampfen des Wassers, **dadurch gekennzeichnet, dass** die Heizvorrichtung (2) beweglich angeordnet und in die Schublade (3) absenkbar ist.

2. Küchengerät nach Anspruch 1, wobei die Heizvorrichtung (2) ein Heizungsgehäuse (5) und eine im Heizungsgehäuse (5) angeordnete Heizung (6) aufweist, wobei das Heizungsgehäuse (5) mindestens eine Öffnung (22) aufweist zum Durchtritt von Wasser aus der Schublade (3) in das Heizungsgehäuse (5).

3. Küchengerät nach Anspruch 2, wobei ein Durchtrittsquerschnitt der Öffnung (22) bzw. Öffnungen mit einem Schwimmer bei Eintritt des Heizungsgehäuses (5) in das Wasser reduzierbar ist.

4. Küchengerät nach einem der Ansprüche 2 oder 3 mit einer Leitung (13) zum Abführen von Dampf aus dem Heizungsgehäuse (5).

5. Küchengerät nach einem der vorangehenden Ansprüche, wobei die Heizvorrichtung (2) derart schwimmend ausgestaltet ist, dass sie im Bereich der Oberfläche des Wassers getragen ist.

6. Küchengerät nach einem der Ansprüche 2 bis 4 und nach Anspruch 5, wobei die Heizvorrichtung (2) derart schwimmend ausgestaltet ist, dass sie so tief einsinkt, dass die Heizung unter die Oberfläche eintaucht.

7. Küchengerät nach einem der vorangehenden Ansprüche, wobei die Heizvorrichtung (2) an einem schwenkbaren Träger (4) angeordnet ist, der in die Schublade (3) absenkbar ist.

8. Küchengerät nach Anspruch 7, wobei der Träger (4) eine Parallelogrammführung aufweist, welche die Heizvorrichtung (2) kippfest aber schwenkbar trägt.

9. Küchengerät nach einem der Ansprüche 1 bis 6, wobei die Heizvorrichtung (2) vertikal von oben in die Schublade (3) absenkbar ist.

10. Küchengerät nach einem der vorangehenden Ansprüche, wobei die Heizvorrichtung (2) mit einem flexiblen Schlauch (13) zum Fortführen von Dampf verbunden ist.

11. Küchengerät nach einem der vorangehenden Ansprüche mit einem Garraum zum Garen von Speisen, in welchen vom Dampferzeuger erzeugter Dampf einleitbar ist.

12. Küchengerät nach einem der vorangehenden Ansprüche, wobei ein Wasserstandssensor vorgesehen ist, der aus der Position der Heizvorrichtung (2) ein Pegelstandssignal ableitet.

## Claims

1. Kitchen device with a steam generator comprising a compartment (3) for receiving water and a heating device (2) for evaporating the water, **characterized in that** the heating device (2) is movably arranged and lowerable into the compartment (3).

2. Kitchen device according to claim 1, wherein the heating device (2) has a heating case (5) and a heating (6) arranged inside of the heating case (5), wherein the heating case (5) has at least an opening (22) for the passing through of water from the compartment (3) into the heating case (5).

3. Kitchen device according to claim 2, wherein a pass through cross section of the opening (22) or the openings, respectively, is reducible by means of a float when the heating case (5) enters the water.

4. Kitchen device according to one of the claims 2 or 3, with a duct (13) for purging steam from the heating case (5).

5. Kitchen device according to one of the preceding claims, wherein the heating device (2) is formed as to swim in such a way that it is carried into the area of the water surface.

6. Kitchen device according to one of the claims 2 to 4 and claim 5, wherein the heating device (2) is formed as to swim in such away that it sinks so deep that the heating immerses under the surface.

7. Kitchen device according to one of the preceding claims, wherein the heating device (2) is arranged at a pivotable carrier (4) which is lowerable into the compartment (3).

8. Kitchen device according to claim 7, wherein the carrier (4) has a parallelogram guide which carries the heating device (2) in a tilt-resistant but pivotable way.

9. Kitchen device according to one of the claims 1 to 6, wherein the heating device (2) is vertically lowerable from above into the compartment (3).

10. Kitchen device according to one of the preceding claims, wherein the heating device (2) is connected to a flexible hose (13) for carrying on steam.

11. Kitchen device according to one of the preceding claims, with a cooking space for cooking dishes, inside of which steam is introducible from the steam generator.

12. Kitchen device according to one of the preceding claims, wherein a water level sensor deriving a water level signal from the position of the heating device (2) is provided.

## Revendications

1. Appareil de cuisine doté d'un générateur de vapeur comportant un tiroir (3) pour le logement d'eau et un dispositif de chauffage (2) pour l'évaporation de l'eau, **caractérisé en ce que** le dispositif de chauffage (2) est disposé de manière mobile et peut être abaissé dans le tiroir (3).

2. Appareil de cuisine selon la revendication 1, dans lequel le dispositif de chauffage (2) présente un boîtier de chauffage (5) et un chauffage (6) disposé dans le boîtier de chauffage (5) et dans lequel le boîtier de chauffage (5) présente au moins une ouverture (22) pour le passage de l'eau du tiroir (3) dans le boîtier de chauffage (5).

3. Appareil de cuisine selon la revendication 2, dans lequel une section de passage de l'ouverture (22) ou des ouvertures peut être réduite avec un flotteur lors de l'entrée du boîtier de chauffage (5) dans l'eau.

4. Appareil de cuisine selon l'une quelconque des revendications 2 ou 3 dans lequel une conduite (13) zst prévue pour l'évacuation de la vapeur hors du boîtier de chauffage (5).

5. Appareil de cuisine selon l'une quelconque des revendications précédentes dans lequel le dispositif de chauffage (2) est configuré de manière flottante de telle sorte qu'il soit porté dans la zone de la surface de l'eau.

6. Appareil de cuisine selon l'une quelconque des revendications 2 à 4 et selon la revendication 5 dans lequel le dispositif de chauffage (2) est configuré de manière flottante de telle sorte qu'il s'enfonce si profondément que le chauffage plonge sous la surface.

7. Appareil de cuisine selon l'une quelconque des revendications précédentes dans lequel le dispositif de chauffage (2) est disposé sur un support (4) pivotant qui peut être abaissé dans le tiroir (3).

8. Appareil de cuisine selon la revendication 7, dans lequel le support (4) présente un guidage en parallélogramme qui porte de manière résistante au basculement mais pivotante le dispositif de chauffage (2).

9. Appareil de cuisine selon l'une quelconque des revendications 1 à 6, dans lequel le dispositif de chauffage (2) peut être abaissé verticalement par le haut dans le tiroir (3).

10. Appareil de cuisine selon l'une quelconque des revendications précédentes, dans lequel le dispositif de chauffage (2) est relié à un tuyau (13) flexible pour la transmission de la vapeur.

11. Appareil de cuisine selon l'une quelconque des revendications précédentes avec un espace de cuisson pour la cuisson de mets, dans lequel de la vapeur générée par le générateur de vapeur peut être introduite.

12. Appareil de cuisine selon l'une quelconque des revendications précédentes, dans lequel un capteur de niveau d'eau est prévu, celui-ci dérivant de la position du dispositif de chauffage (2) un signal de niveau.
